# EUROPEAN PATENT SPECIFICATION

(11) **EP 3 911 563 B1**
(45) Date of publication and mention of the grant of the patent: **07.06.2023**
(21) Application number: 20701165.1
(22) Date of filing: 15.01.2020
(51) Int. Cl.: B62M 6/40, B62J 50/22, B62K 23/02, B62K 21/26

(54) **INTERACTIVE HANDLE FOR ELECTRICALLY ASSISTED VEHICLE**
INTERAKTIVER GRIFF FÜR FAHRZEUG MIT ELEKTRISCHEM HILFSANTRIEB
POIGNÉE INTERACTIVE POUR VÉHICULE À ASSISTANCE ÉLECTRIQUE

(30) Priority: 15.01.2019 DK PA201970030
(43) Date of publication of application: 24.11.2021
(73) Proprietor: Promovec A/S, 8240 Risskov (DK)
(72) Inventor: KRUISSELBRINK, Eric, 7119 AE Winterswijk (NL); UBBINK, Tomas Bernard, 7104 BR Winterswijk Meddo (NL)
(74) Representative: Guardian IP Consulting I/S
(86) International application number: PCT/EP2020/050933
(87) International publication number: WO 2020/148345

(56) References cited:
- EP-A2- 0 794 113
- CN-A- 109 094 709
- CN-U- 202 295 170
- CN-U- 206 235 819
- DE-A1- 19 607 639
- GB-A- 2 183 569
- JP-A- 2001 130 477
- KR-B1- 101 055 637
- TW-A- 201 801 978
- US-A1- 2016 083 033

## Description

The present invention relates to a handle for a handle bar of a wheeled, pedal driven, electrically assisted vehicle, such as an electrically powered bicycle.

### Background of the invention

In order to control the electric motor of electrically powered/assisted bicycles (or simply electric bicycles), electric bicycles are equipped with various control means. Such control means may include a motorcycle-type rotatable gas handle or similar rotatable part of a handle. Further it is known to provide control panels with control means on a handle-bar of the electric bicycle. The control means may comprise input buttons for example for entering a desired speed or speed level, and displays for showing the state of the bicycle, such as the speed or speed level, or other information, e.g. the operational status of the electric motor. An electric bicycle with such control panel is disclosed in EP 2 868 564 A1.

KR 101 055 637 B1 discloses the preamble of claim 1.

The maximum speed of electric bicycles is often limited by national international regulations. However, even in jurisdictions, where the a relatively low maximum speed is set, and where the maximum speed to which the electric bicycle can be propelled or at least assisted, is limited by a control system of the electric bicycle, the electrical bicycle may still reach a speed, at which it difficult for the user/rider to overview a display and/or find the control input means. Especially, when a bicycle is propelled or motor assisted this may be difficult also at very low speed. For example the control panel disclosed in EP 2 868 564 A1, which is provided on an elevated separate part attached to the handle bar next to the handle, may be difficult to service when in motion.

Therefore, there is a need for a control system and control means for an electric bicycle which are easy and simple to access and operate, preferably under all possible operating conditions. Further, there is a need for a control system and control means for an electric bicycle which are robust to impact, durable for prolonged use, which is reliable under also harsh weather conditions, and at the same time cost efficient to manufacture. There is further a need for a control system and control means for an electric bicycle which can provide a basis for numerous additional functionalities of an electrical bicycle.

### Summary of the invention

It is therefore an object of the invention provide a solutions that overcomes the problem of the prior art. More specifically it is an object to provide an easy and simple way operate the electric motor of wheeled, pedal driven, electrically assisted vehicle, such as an electrically powered bicycle, hereunder to provide input to and to verify a status of the wheeled, pedal driven, electrically assisted vehicle.

This is achieved by the system of claim 1.

Thereby, a very easy way of controlling e.g. an assist level - or other functionalities of the vehicle is obtained due to an advantages distribution of the display and input devices.

The handle may be defined as an interactive handle.

The portion of the handle which is enveloped/encircled by the handle may preferably be a portion which is extending in a perpendicular direction relative to a longitudinal direction of a frame of the vehicle.

The portion of the handle which is enveloped/encircled by the handle (and thereby the outer surface thereof may be a distal portion of the handle. By distal in this context is meant furtherst away from a frame of the vehicle.

The wheeled, pedal driven, electrically assisted vehicle, or simply vehicle may be an electrically powered bicycle, a tri-wheeled, electrically assisted cycle, such as a cargo bike, or other wheeled, pedal driven, electrically assisted vehicles, where these have a handle bar for steering the vehicle.

The display is preferably configured for displaying a status of the electrically powered bicycle and/or an electrical motor of the electrically powered bicycle 100. The status may for example be the speed of the vehicle, or a chosen assist level of/for the electric motor and/or a battery level. A first controller may be arranged the handle 1 and be connected to the display via suitable electronic connection means, such as a wiring. Further, the first controller may be connected to sensors in the electric motor and/or to sensors (such as speed sensors) in the vehicle via suitable electronic connection means (e.g. wire or wirelessly). In the case of a wired connection, the wires may be conducted at least through the handle bar and/or other parts of a frame of the vehicle. Thereby, information about the status of the motor or the electrically powered bicycle may be conveyed to the processor, which may present the information in suitable form in the display.

The one or more input devices are preferably configured for converting an input by touch (pressure) of a user of the handle to an electric signal to the electrical motor of the vehicle. The one or more input devices may be push buttons, push sensors, touch screens, or the like. A first controller may - as mentioned above - be arranged in the handle, and further be connected to the one or more input devices via suitable electronic connection means, e.g. a wiring. Further, the controller may be connected to a control in or at the electric motor via suitable electronic connection means (e.g. wire or wirelessly). In the case of a wired connection, the wires may be conducted through the handle bar and/or other parts of a frame of the electrically powered bicycle. Thereby, a control signal may be conveyed from the one or more input devices, via the processor in the handles, and via the electrical connection to the control unit in the electric motor, to control at least the speed of the electrically powered bicycle.

In the previous sections, the display and input devices have been described as been connected to a controller located in the handle itself. However, the display and input devices may alternatively or additionally be connectable to a controller provided in the vehicle as such, for example in an electric motor of the vehicle.

By a first position may be understood a first circumferential position. By a second position may be understood a second circumferential position. When the one or more input devices are provided at the outer surface at a second position at an opposite side of said main body relative to the first position this means that the the one or more input devices (at second position) are located at diametrically across from the diplay (first position) as seen in a section through the elongate body of the handle in, the section taken perpendicular to a longitudinal axis of the handle. Prefereably, the display is located at an upwardly facing surface/upper surface (when the handle is mounted on the handle bar of the vehicle). Consequently, the one or more input devices is/are located at an downwardly facing surface/lower surface (when the handle is mounted on the handle bar of the vehicle).

In an embodiment of the handle, the outer surface forms a uniform smooth closed surface.

In a further embodiment an outer surface of said display is flush with the outer surface.

In a further embodiment the elongate body of the handle comprises a inner portion having a first width, in which inner portion the display is provided, and an outer portion, which outer portion comprises a front portion and a back portion, which back portion extends beyond the first width in a direction perpendicular to a longitudinal direction of the elongate body Thereby, a particularly ergonomic handle is obtained.

In a further embodiment thereof the first input device of the one or more input devices is located at an intersection between the inner portion and the outer portion. Thereby, the first input device is easily accessible for a user/rider, when the handle is mounted on the vehicle, and in use.

In a further embodiment thereof, second input device is located/arranged in the outer portion adjacent to the first input device. Preferably, the second input device is arranged adjacent to and distally of the first output device, as seen in the direction of a longitudinal direction of the handle. Distally here means close to the second end of the handle Thereby, the first input device may be used as an indicator for finding the second input device.

In a further embodiment thereof a protrusion is provided at an intersection between the inner portion and the outer portion.

The protrusion has an extend which is larger than the first width of the inner portion of the handle. Preferably, the protrusion extends from a lower surface/lower side of the handle opposite from the upper surface, where the diplay is arranged.

The first input device may be formed on said protrusion, or be formed as a part thereof. Thereby, the first input device can easily be located by a user/rider during use, despite the input devices facing away from the user of the vehicle.

In a further embodiment, the handle comprises an electronics sleeve and an outer sleeve at least partially surrounding said electronics sleeve. The electronic sleeve may support electronic components. For example the display may be formed on the electronics sieve. Also, in some cases, one or more of the input devices may be arranged on the electronics sleeve. Openings may be formed in the outer sleeve in order to allow acces to the electronic components on the electronics sleeve. For example an opening may be provided in the outer sleeve at the location covering the diplay to allow visual inspection of the display. Alternatively, the outer sleeve may be formed in a transparent material or have a transparent window at the location covering the display. For example an opening may be provided in the outer sleeve at the location covering each of the one or more input devices, such that the one or more input devices may extend through the outer sleeve. Alternatively, the input devices may be covered by the outer sleeve, the input devices being activatable through the outer sleece. In this case, the outer sleeve - at the location(s) corresponding to the one or input devices may be equipped with a marking such as a tactile marking allowing a user to sense the location of the input device.

In a further embodiment, the outer sleeve comprises a base shell formed in a transparent material, and an overlaying outer shell formed in a thermoplastic elastomer material. Thereby, a robust handle may be achieved, which is moisture and water resistant, to protect electrical components within the handle.

Preferably, the display is visually accessible through an opening provided in through the outer shell, and because of a portion of said base shell overlaying the display is transparent.

In an embodiment the elongate body of the handle comprises an end wall formed at the second end of the elongate body.

In a further embodiment thereof the handle comprises a battery sleeve connected at and extending from the end wall towards the first end. The battery sleeve may comprise a battery for powering the display and possibly other electronic component arranged in the handle.

In an embodiment, an internal space may be formed in the battery sleeve. Thereby, a power supply, e.g. comprising one or more batteries may be provided within the handle, and whereby space consumption in the handle is optimized.

In an embodiment of the system, the display is configured for displaying information indicative of an assist level of said electric motor, and said one or more input devices are configured to set an assist level for the electric motor.

In a further aspect the objects of the invention are obtained by a wheeled, pedal driven, electrically assisted vehicle having a handle bar wherein at least one end of the handle bar comprises a handle according to any one of the embodiment of the first aspect of the invention.

In an embodiment, the vehicle (100) comprises a controller where the controller is configured for operating the control system according to any of the embodiments.

It should be emphasized that the term "comprises/comprising/comprised of" when used in this specification is taken to specify the presence of stated features, integers, steps or components but does not preclude the presence or addition of one or more other features, integers, steps, components or groups thereof.

### Brief description of the drawings

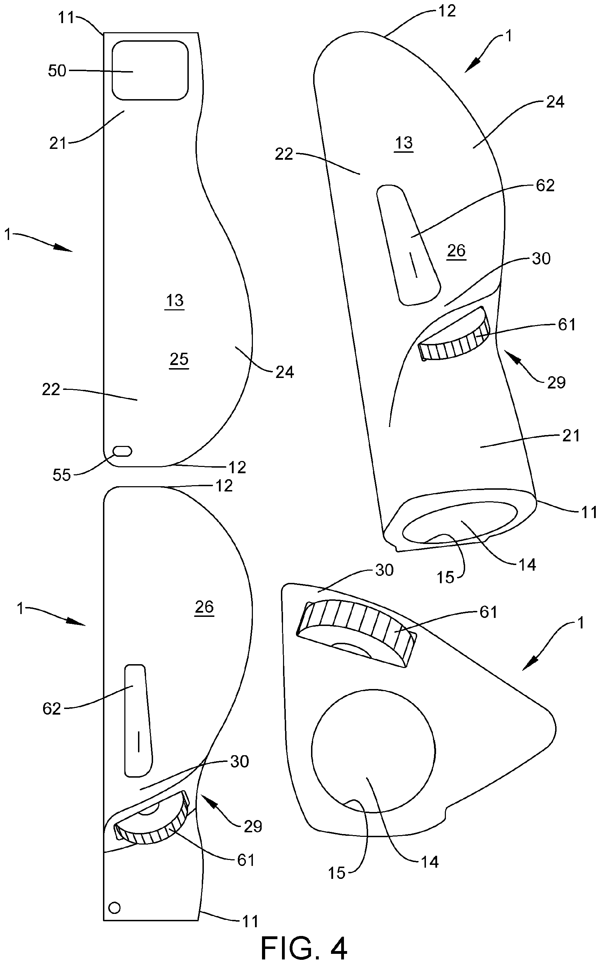

In the following, the invention will be described in greater detail with reference to embodiments shown by the enclosed figures. It should be emphasized that the embodiments shown are used for example purposes only and should not be used to limit the scope of the invention.
Fig. 1, in a side view, shows a wheeled, pedal driven, electrically assisted vehicle in the form of an electrically powered bicycle;
Fig. 2 shows a handle according to an embodiment of the invention in six different views,
   - in the top left, a top view,
   - in the bottom left, a bottom view,
   - in the top middle, an end view as seen from the frame of the vehicle and out,
   - in the bottom middle a side view,
   - in the top right, a perspective view from below, and
   - on the bottom right side of the figure, a perspective view from above;

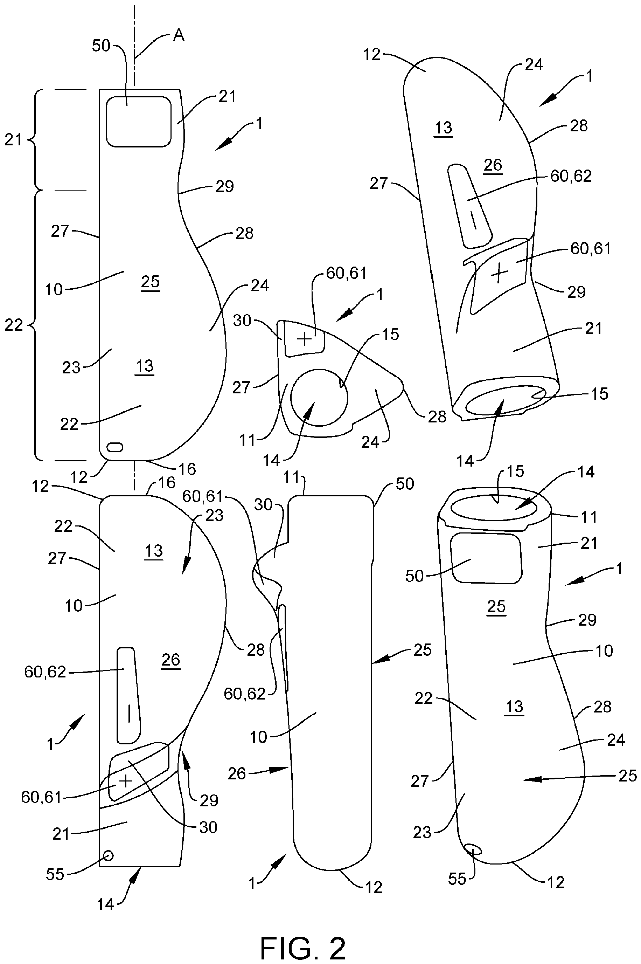

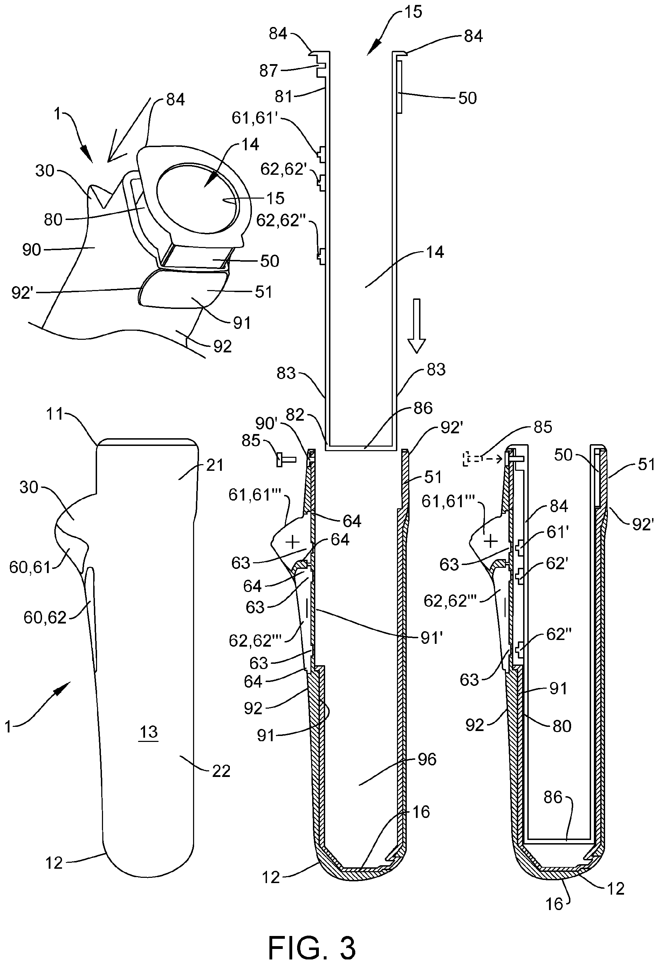

Fig. 3, in schematic form, illustrates the assembly of a handle as shown in Fig. 2, where
   - the bottom left show a side view of the handle,
   - the central part of the figure shows, in a section, an inner electronics sleeve and an outer shell of the handle in a disassembled state,
   - the right side of the figure, in a sectional view, shows the handle in a partly assembled state, and
   - the top left part of the figure shows, in a perspective view, the inner electronics sleeve being pushed into the outer shell of the handle
Fig. 4 shows a handle according to another embodiment of the invention, where a first input device is a turn wheel, in four different views,
   - in the top left, a top view,
   - in the bottom left, a bottom view,
   - in the top right, a perspective view from below, and
   - on the bottom right side of the figure, a perspective view from above;

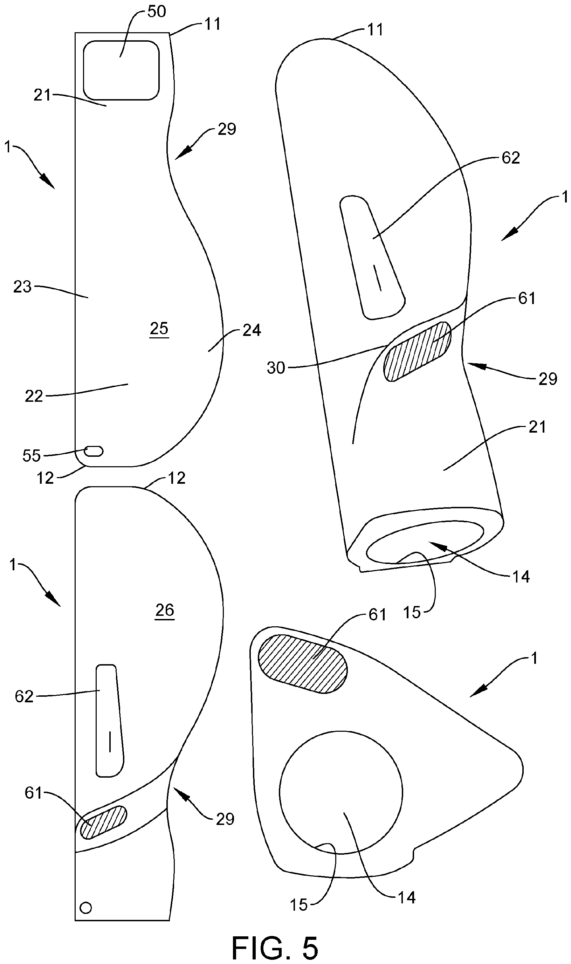

Fig. 5 shows a handle according to yet another embodiment of the invention, where on or more input devices pressure sensors provided at an outer surface, the being shown in four different views,
   - in the top left, a top view,
   - in the bottom left, a bottom view,
   - in the top right, a perspective view from below, and
   - on the bottom right side of the figure, a perspective view from above;

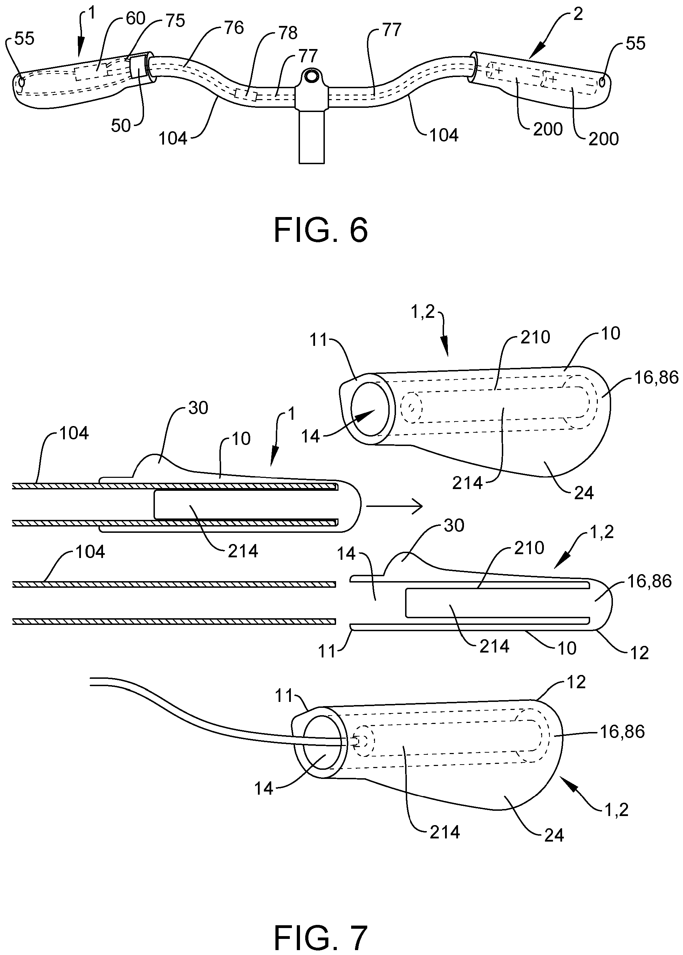

Fig. 6, in a perspective partly see-through view, shows a handle bar, with a handle according to the invention on the left side of the handle bar (and the left side of the figure), and illustrating also how a power supply for the handled may be arranged in a second handle at the opposite (right) side of the handle bar, and also illustrating the power connections for the handle in a system according to a second aspect of the invention;
Fig.7 illustrates how a power supply for a handle according to the invention may be arranged in either the handle itself or in a second handle forming part of a system according to the second aspect of the invention,
   - where, in a see-through perspective view, at the top of the figure a bicycle handle with a power supply compartment is shown,
   - where the second item from the top, in a sectional view, shows a handle with a power supply compartment mounted on a handle bar,
   - where the third item from the top, in a sectional view, shows a handle with a power supply compartment disassembled from the handle bar, and
   - where, at the bottom a power connection to the power supply
      compartment is shown;

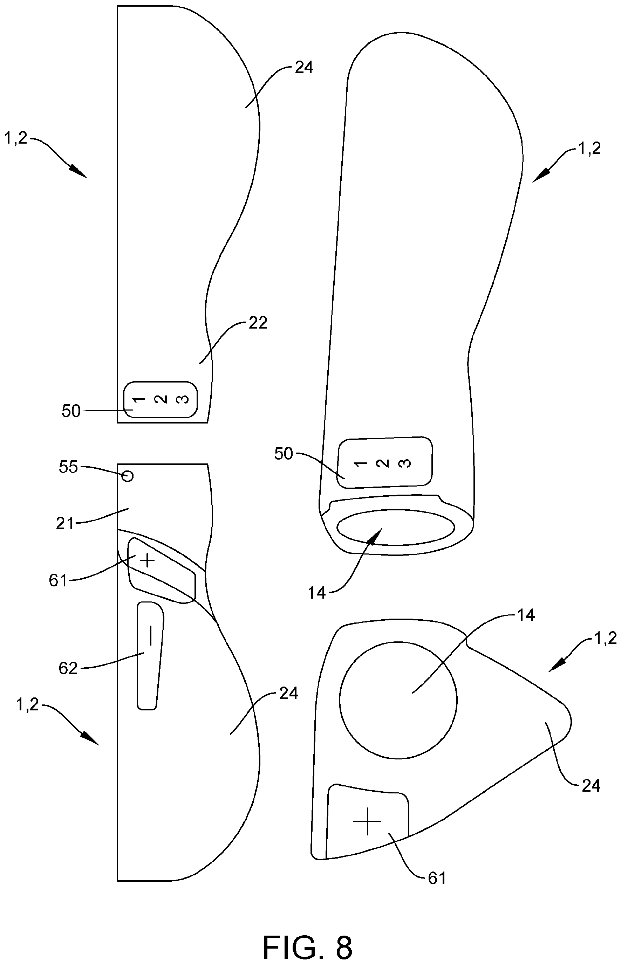

Fig. 8 shows a handle according to another embodiment of the invention, in four different views,
   - in the top left, a top view,
   - in the bottom left, a bottom view,
   - in the top right, a perspective view from above, and
   - on the bottom right side of the figure, an end view as seen from the
      frame of the vehicle and out;

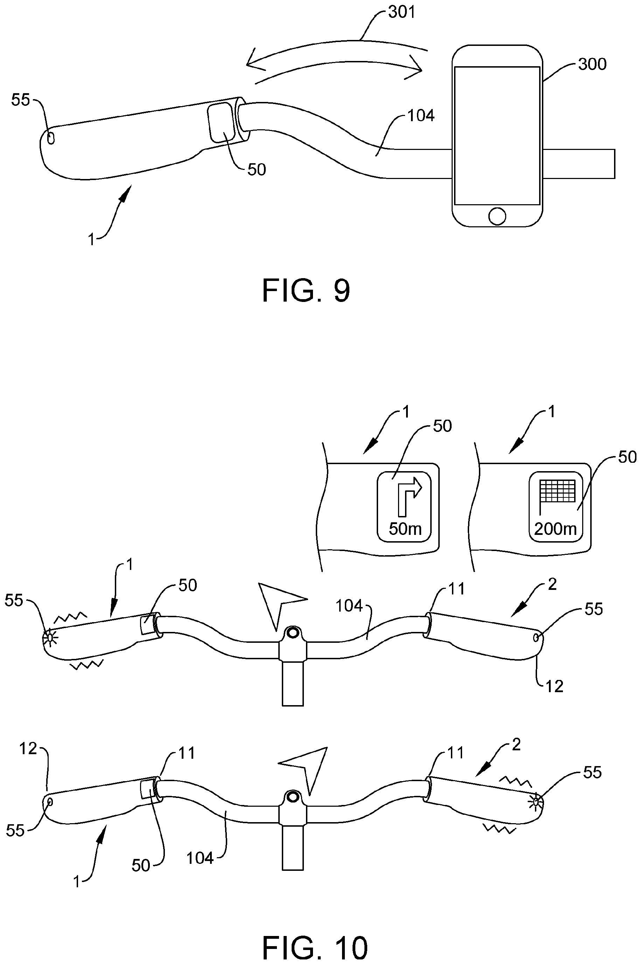

Fig. 9 shows a handle bar with a handle according to the invention, and a mobile electronic device connected to the handle bar also;
Fig. 10 illustrates the implementation of a navigation system into a system according to the second aspect of the invention, where
   - the top right view shows two different possible signals to a user displayed in a display of a handle according to the invention, and
   - the lower left view illustrates different ways of indicating an upcoming left and right turn, respectively;

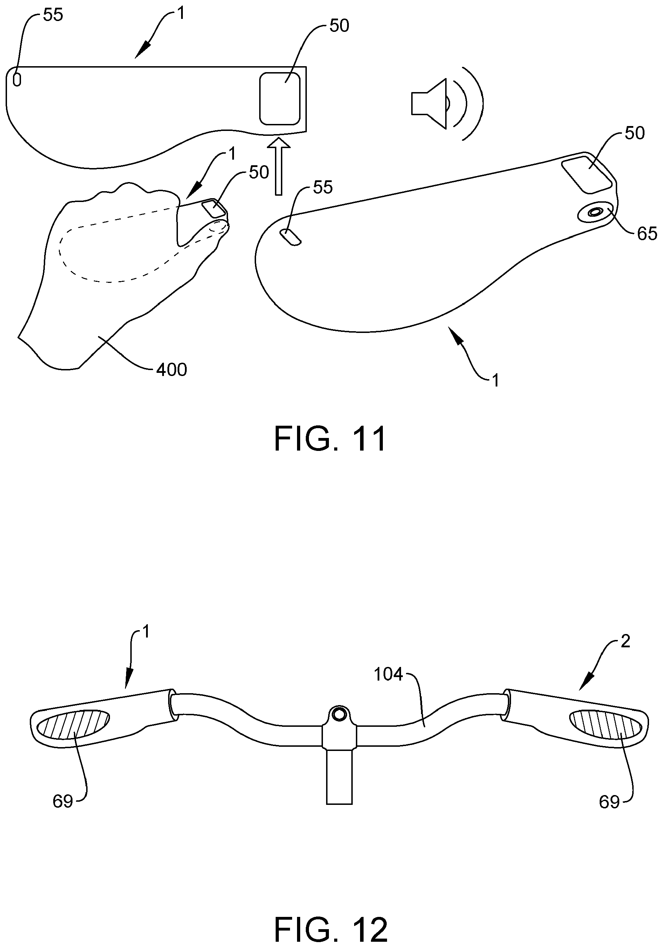

Fig. 11 illustrates the arrangement of a third input device, which may for example be used for activating a sonic alarm;
Fig. 12 illustrates a hand sensor arrangement in a handle; and

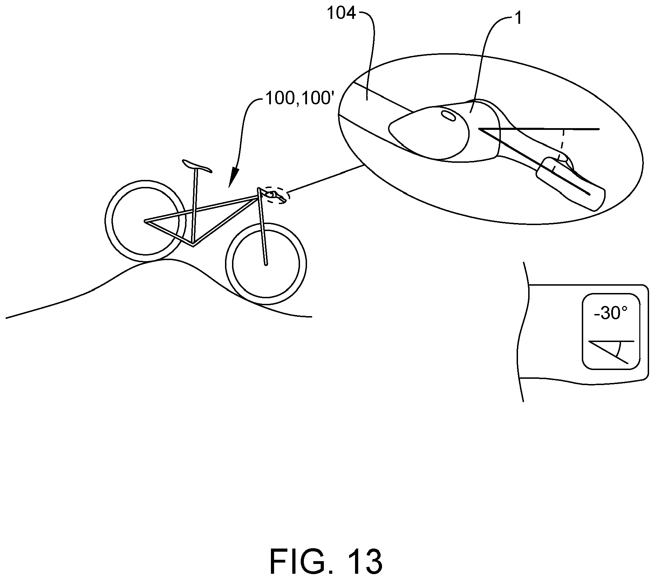

Fig. 13 illustrates an inclination sensor arrangement in a handle of a bicycle.

In the context of the present invention the terms "upper" "top view", "from above" and the like in connection with the bicycle handle is intended to refer to the handle, when in use and mounted on a handle bar of e.g. a bicycle of a conventional type or an electronically powered bicycle of a conventional type.

In the context of the present invention the terms "lower" "bottom view", "from below" and the like in connection with the bicycle handle is intended to refer to the bicycle handle, when in use and mounted on of e.g. a bicycle of a conventional type or an electronically powered bicycle of a conventional type.

### Detailed description of the embodiments

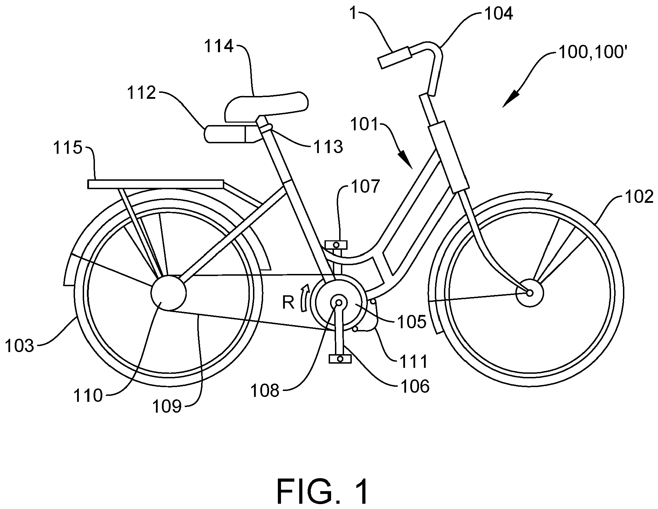

Fig. 1 shows a wheeled, pedal driven, electrically assisted vehicle 100 (or simple vehicle), exemplified by an electrically powered bicycle 100'. The electrically powered bicycle 100' comprises a frame 101, a front wheel 102, a rear wheel 103, a handle bar 104, and a main sprocket 105 arranged in connection with a crank arm 106, equipped with a pedal 107, arranged for propelling the bicycle by a user or rider.

The electrically powered bicycle 100' comprises a drive, the drive comprising a drive shaft 108, the main sprocket 105 arranged coaxially with the drive shaft 108, the crank arm 106 arranged on the drive shaft 108, and an endless chain 109 arranged over said main sprocket 105.

The drive shaft 108 is rotatably supported in a lower central portion of the frame 101, and a left and a right end of the drive shaft 20 are fitted with pedals 105 via the crank arms 106. The drive shaft 108 is coaxially fitted with the main sprocket 105 for transmitting the revolution of the crank arms 106 and main sprocket 30 in the direction indicated by the arrow R in Fig. 1, corresponding to the forward driving direction of the bicycle.

The main sprocket 105 is - via the endless chain 109 - connected to a rear sprocket 110, arranged at a hub of the rear wheel 103

By a trot in the pedals 107 by the bicyclist, the crank arm 106, the sprocket 105 and the drive shaft 108 may be forced to rotate in the direction of the arrow R. Thereby power is transferred via the chain 109 to the rear sprocket 110, and consequently to the rear wheel 103. Thereby, the bicycle may be propelled forward (in Fig. 1 this is toward the left in the figure).

The electrically powered bicycle 100' shown is of the type having a coaster brake. A coaster brake is a type of drum brake integrated into the rear wheel hub with an internal freewheel. Thereby the electrically powered bicycle has a freewheeling function as with other systems, where - when back pedaled - the brake engages after a fraction of a revolution. Coaster brakes can be found in both single-speed and internally geared hubs.

The electrically powered bicycle 100' further comprises an electric motor 111. The electric motor 111 shown in Fig. 1 is a center motor. It will be appreciated that the invention will also apply to other types of electrically powered bicycles, e.g. with an electric motor arranged in a hub of the front wheel or the rear wheel. It will further be appreciated that the invention will apply to also tri-wheeled, electrically assisted cycles, such as cargo bikes, and other wheeled, pedal driven, electrically assisted vehicles 100, when these have handle bar 104 for steering the vehicle 100.

Now returning to Fig. 1, an electric center motor 111 in electrically powered bicycles is a motor that engages the main sprocket 105, which is also connected to the crank arm (pedal crank arm) of the bicycle 100'. The electric center motor 111 thereby may aid a bicyclist in propelling the bicycle.

The vehicle 100, such as the electrically powered bicycle 100' may further comprise a power source in the form of a battery or set of batteries (not shown in Fig. 1) for powering the electric motor 111. The battery or set of batteries may be provided in a battery pack 112. The battery pack 112 may be removable attached to the electrically powered bicycle 100' at a suitable location. For example, the battery pack 112 may be attached to a seat post 113 under a saddle 114, as shown in Fig. 1, on or under a rear luggage carrier 115, on or under a front luggage carrier (not shown), or in a part of the frame 101 such as a seat tube, a top tube or a down tube.

The vehicle 100, such as the shown electrically powered bicycle 100' of the illustrated embodiment may be provided with a control for assisting the pedal effort at an assist ratio (assisting power/pedal effort) that is determined from at least a bicycle running speed and the pedal effort. The control system of the electrically powered bicycle 100' preferably comprises a microcomputer (not shown), which provides a control of the electronic processes of the vehicle 100, especially the electric motor 111.

The microcomputer may receive as input signals at least a revolving speed signal from a sensor (not shown) arranged in connection with a drive of the vehicle 100/electrically powered bicycle 100', e.g. on a drive shaft 108, a crank arm 106 or in a one-way clutch (not shown), for calculating a running speed and strain gauge signals used for calculating the pedal effort. Means for generating those input signals are known in the art and will not be described in further details. The microcomputer calculates the running speed and the pedal effort from those input signals and executes the electronic processing for determining the assist ratio based on a predetermined algorithm. Subsequently, the microcomputer sequentially outputs pulse signals to provide an instruction to the electric motor 111 to generate the assisting power in association with the determined assist ratio.

Fig. 2 shows a handle 1 according to one aspect of the invention. The handle 1 may be utilized in connection with an electric bicycle 100' as described, but also for other wheeled pedal driven, electrically assisted vehicles 100 having a handle bar 104.

The handle 1 may be configured for attachment to the left side of a handle bar 104. In this case it is particularly usefully for electrically powered bicycles 100, where the electric motor is used to assist the pedalling of the user/rider, and where the right handle is often equipped with a gear shift device and/or a hand brake. However, it will be appreciated that the handle 1 may also be configured for attachment on the right side of the handlebar 104 of the wheeled, pedal driven, electrically assisted vehicle 100.

Fig. 2 shows a handle 1 according to an embodiment of the invention in six different views, a top view at the top left of the figure; a bottom view in the bottom left of the figure; in the top middle of the figure, an end view as seen from the frame 101 of the vehicle and out toward an end of the handle 1 (when mounted on the handle bar 104; a side view in the bottom middle; a perspective view from below in the top right of the figure; and on the bottom right side of the figure, a perspective view from above.

The handle 1 comprises an elongate body 10 having a first end 11, a second end 12 and an outer surface 13. The first end 11 may also be called a proximal end, because this end is closer to a frame of the vehicle 100 when the handle 1 is mounted on the handle bar 104 thereof. The second end 12 may also be called a distal end, because this end is furthest away from a frame of the vehicle 100 when the handle 1 is mounted on the handle bar 104 thereof. The elongate body 10 has a longitudinal direction or axis A between the first end 11 and the second end 12. When mounted on a handle bar 104 of a vehicle 100, the first side 11 is intended to face towards the frame 101 of the vehicle 100, such a bicycle 100', and the second side is intended to face away from the frame 101. Thus, the first end 11 may also be called the inner end, or the proximal end, and the second end 12 may be called the outer end, or distal end. The elongate body 10 is configured for surrounding or enveloping a portion of a handle bar 104 of a vehicle 100. For this purpose, the elongate body 10 further comprises a receiving hollow 14 (or simply a hollow) configured for receiving the portion of the handle bar 104. The hollow is elongate and extends in the direction of the longitudinal axis/direction A.

The hollow 14 is preferably cylindrical in shape such that it will fit around a cylindrical handle bar 104. Cylindrical handle bars are common in the art. It will be appreciated, that a cross sectional shape (perpendicular to the longitudinal axis of the elongate body 10) of the hollow may have other shapes and still be able to cooperate with a cylindrical handle bar 104, or that the cross-sectional shape of the hollow 14 may be adapted to a handle bar having a cross-section which is not circular, such as oval or polygonal.

An opening 15 is provided into the hollow 14 at the first end 11 of the elongate body 10 of the handle 1. The opening 15 allows the handle 1 to be slid over an end of the handle bar 104. In Fig. 2 the upper middle view provides a view through an opening 15 into the hollow 14.

In the embodiment shown in Fig. 2, the elongate body 10 only has an opening 15 formed at the first end 11, i.e. the hollow 14 is closed at the second 12, by an end wall 16 of the elongate body 10. Thereby, the handle may be configured for location at an end portion of a handle bar 104. It will be appreciated that that in other, not shown, embodiments the elongate body 10 may be formed with an opening into the hollow 14 in the second end 12 also. This will allow the handle1 to be slid further along the handle bar 104, such that it is not necessarily to be positioned at the end of the handle bar. For example it may thereby be utilized with the horizontal part of a racer type handle bar perpendicular to the frame.

In either case the receiving hollow 14 provided within said elongate body 10 is configured for receiving a portion of a handle bar 104 of the vehicle 100, such that the main body 10 may surround said portion of the handle bar 104, and such that said outer surface 13 encircles a portion of the handle bar 104.

In not shown embodiments, the elongate body 10 of the handle bar 1 may be generally or fully cylindrical in shape. However, as shown in e.g. Fig. 2 the elongate body 10 of the handle may have an ergonomic shape configured for cooperating with a hand of a user. The shape of the handle may - as shown in Fig. 2 - involve that the handle comprises an inner portion 21 at the first end 12 and an outer portion 22 at the second end. As shown the inner portion 21 may be generally cylindrical. The inner portion 21 may form about one third of a total length (along the longitudinal axis/direction A) of the elongate body part 10 of the handle 1. Correspondingly, the outer portion 22 may form about two thirds of the total length of the elongate body part 10 of the handle 1. Thus, a length of the inner portion 21 and a length of the outer portion 22 (along the longitudinal axis/direction A) together forms the total length of the elongate body 10 of the handle 1.

The outer portion 22 of the elongate body 10 may as shown in Fig. 2, comprise a front portion 23 and a back portion 24. By front portion 23 is meant that this portion is intended to face forward relative to direction of motion of the vehicle 100, when the handle 1 is mounted. Correspondently, the back portion is intended to face backwards relative to the direction of motion. The back portion 24 is preferably flattened out, relative to the front portion 23. The front portion preferably contains the hollow 14, while the back portion 24 extends backwards from the hollow (and thereby the handle bar 104 when mounted on the handle bar104). The back portion 24 preferably has a reduced thickness relative to the front portion 23. The back portion preferably forms the greater part of an upwardly facing surface 25 configured for receiving and cooperating with a palm of a hand of a user, while the users fingers cooperate with the front part 23 and possibly an underside 26, such that the users fingers bend around the front part. The portion/intersection between a thumb and an index finger of a hand of a user is intended to rest at a slightly narrowed portion 29 between the inner portion 21 and the outer portion 22, the narrowing portion 29 forming an indentation in a rearward facing side 28 of the elongate body 10 of the handle 1. A frontally facing side 27 (when mounted on a handle bar) of the elongate body 10 of the handle 1 is generally straight. From Fig. 2 it will also be appreciated that the a protrusion 30 may be arranged at the lower surface 26 of the elongate body 10 of the handle between the inner portion 21 and the outer portion. The protrusion 30 preferably aids tactile positioning of at least the tip of the thumb of a user/rider in relation to a one or more input devices 60.

In Fig. 2 the shown handle 1 is configured for being arranged on the left side of a handle bar 104 and thus for the users/riders left hand.

In an embodiment, and as shown in Fig. 2A, a display 50 is provided at the outer surface 13 at said first end 11 of the elongate body 10 at a first position. The display 50 is preferably provided on the upper surface 25 side of the elongate body 10 of the handle 1. The display 50 is preferably provided at the innermost end of the inner portion 21 of the elongate body 10 of the handle 1. Thereby, the display 50 is arranged on the handle 1 in such a way that it is visible along a base of the index finger of the user/rider, and between the index finger and the thumb of the user/rider. Thereby, the display 50 is provided at a location which naturally attracts attention of the user/rider, whereby the display is easily located and whereby the content of the display 50 (i.e. information shown in the display 50) may quickly be identified and registered by the user/rider, such that the user/rider may quickly return his/her attention to the road and the traffic when riding the vehicle 100.

In an embodiment, and as shown in Fig. 2, the handle 1 may further comprise one or more input devices 60 provided at the outer surface 13 at second position, and at an opposite side of said main body 10 relative to the first position. In Fig. 2 the handle is equipped with two input devices 60 a first input device 61 and a second input device 62. The one or more input devices 60 such as first and second input devices 61, 62 may as shown in Fig. 2 be push buttons. In Fig. 2 the first input device 61 is located on the lower side (or lower surface) 26 of the longitudinal body 10, and preferably substantially at an intersection between the inner portion 21 and the outer portion 22 of the longitudinal body 10 of the handle1. Thereby, the first input device may be reached by the tip of the thumb of a user/rider during use. As shown the first input device is located at the above mentioned protrusion 30. Preferably, the second input device 62 is located next to the first input device 61, but closer to the second end 12 than the first input device 61. The second input device 62 is located on the lower side 26 of the longitudinal body 10, and preferably on an inner part of the outer portion 22 adjacent to the intersection between the inner portion 21 and the outer portion 22 of the longitudinal body 10 of the handle1. The first input device 61 and the second input device 62 may as shown in Fig. 2 be arranged in line along the longitudinal axis/direction, A, at the lower surface 26 of the elongate body 10 of the handle 1. The second input device may thereby be positioned where the user/rider naturally rests the tip of the index finger. Alternatively or additionally, the second input device 62 may be reached/operated with the tip of the middle finger of the hand of the user/rider.

The display 50 may be substantially rectangular. The display 50 may extend in a direction along the longitudinal axis/direction, A, corresponding to about one sixth of the total length of elongate body 10. In a direction perpendicular to the longitudinal/axis direction A the display may extend, such that it at least is formed in the upper surface 25. The display surface may be planar. However in other (not shown embodiments the surface of the display 50 may be curved to follow the outer surface 13 of the handle in the inner portion, in which the display is provided.

The display 50 is preferably configured for displaying a status of the electrically powered bicycle 100 and/or an electrical motor 111 of the electrically powered bicycle 100. The status may for example be the speed of the vehicle, or a chosen assist level of/for the electric motor 111, and/or the battery level for the power to the electric motor 111. A first controller 70 may be arranged the handle 1 and be connected to the display 50 via suitable electronic connection means, such as a wiring. Further, the first controller 70 may be connected to sensors in the electric motor 111 and/or to sensors (such as speed sensors) in the vehicle 100 via suitable electronic connection means (e.g. wire or wirelessly). In the case of a wired connection, the wires may be conducted at least through the handle bar 104 and/or other parts of a frame 101 of the vehicle 100. Thereby, information about the status of the electric motor 111 or the electrically powered bicycle 100 may be conveyed to the processor, which may present the information in suitable form in the display 50.

The one or more input devices 60 are preferably configured for converting an input by touch (pressure) of a user of the handle 1 to an electric signal to the electrical motor 111 of the vehicle 100. The one or more input devices 60 may be push buttons, push sensors, touch screens, or the like. A first controller 70 may - as mentioned above - be arranged in the handle 1, and further be connected to the one or more input devices 60 via suitable electronic connection means, e.g. a wiring. Further, the controller 70 may be connected to a control in or at the electric motor 111 via suitable electronic connection means (e.g. wire or wirelessly). In the case of a wired connection, the wires may be conducted through the handle bar 104 and/or other parts of a frame 101 of the electrically powered bicycle 100. Thereby, a control signal may be conveyed from the one or more input devices 60, via the controller 70 in the handle 1, and via the electrical connection to the control unit in the electric motor 150, to control at least the speed of the electrically powered bicycle 100.

Preferably, the first input device 61 is a 'plus' button which is connected to the control system and configured for increasing the speed or the assist level of the vehicle. Preferably, the second input device 61 is a 'minus' button which is connected to the control system and configured for decreasing the speed or the assist level of the vehicle.

Preferably, the handle 1 is only equipped with the 'plus' and the 'minus' button 61, 62, and a display 50 (such as an OLED display), and possibly a LED 55, see below, on the outside surface of the grip/handle 1.

The handle or handgrip 1 may further comprise a vibration motor (not shown) that can provide haptic feedback to the user/rider. This may provide user/rider a subtle confirmation that a button is pushed or that a function went into effect. The vibration motor can also be used to give the user feedback regarding upcoming traffic, a safety issue, a low battery, etc.

The handle 1 according to the invention, and as shown in e.g. Fig. 2 may be an assembly of parts. This is illustrated in Fig. 3, the bottom left show a side view of the handle. The central and the right views of the figure shows, a section through the handle taken in the plane of the paper. The central view show a where an electronics sleeve 80 and an outer sleeve 90 of the handle 1 are in a disassembled state. In the right side of the figure, the handle is shown in a partly assembled state. In the top left part of the figure the electronics sleeve 80 is seen being pushed into or out of the outer sleeve 90 of the handle 1.

The outer sleeve 90 gives the handle/handgrip 1 the right appearance and ergonomic shape, and the electronics part sleeve 80 carries the electronics needed for the functioning of the handle 1, and provides a connection to the handlebar.

The outer sleeve 90 is a two-component part with a base shell 91 and an outer shell 92. The base shell 91 is preferably formed in a hard, transparent material, such as PC (polycarbonate). The outer shell 92 is preferably formed in a thermoplastic elastomer material (TPE) such as a thermoplastic rubber material. The outer shell 92 may preferably be formed on the base shell 91. Preferably the outer shell 92 is over moulded on the base shell 91 with the rubber-like material. This results in a part that only has one gap or internal hollow 96. The electronics sleeve 80 may then be inserted into the internal hollow 96.

The electronics sleeve 80 is an elongate structure having a first end 81 and a second end 82. An end wall 86 may be formed at the second end 82. At least the first end 81 of the electronics sleeve 80 has an opening 15 into a hollow 14 which is the same as the hollow 15 of the handle 1 as described above in connection with Fig. 2 above. Thus, the opening 15 into the electronics sleeve 80 is also the same as the opening of the handle 1 as described above in connection with Fig. 2 above.

Various electronic components may be formed on an outer surface 83 of the electronics sleeve 80. For example, the above mentioned controller 70 (not shown in Fig. 3) may be provided on the outer surface of the electronics sleeve 80. Also, and as shown in Fig. 3 the above mentioned display 50 may be formed on the outer surface 83 of the electronics sleeve 80. Further and as also shown in Fig. 3, a pressure sensor part 61' of the first input device 61 is located on the outer surface 83 of the electronics sleeve 80 at a position opposite to the display 50. Further, and as also shown in Fig. 3, a two pressure sensor parts 62', 62" of the second input device 62 is located on the outer surface 83 of the electronics sleeve 80 at a position opposite to the display 50, and adjacent to the location of the pressure sensor part 61' of the first input device 61.

The pressure sensor part 61' of the first input device 61 cooperates with a first button shell part 61‴ of the first input device 61. Likewise the two pressure sensor parts 62', 62" of the second input device 62 cooperates with a second button shell part 62‴ of the second first input device 62. The first and second button shell parts 61‴, 62‴ may be glued or snapped to the outer shell 92 of the outer sleeve and comprise protruding pressure knobs 63 for cooperating with the pressure sensor parts 61', 62', 62", through the outer shell 92 of the outer sleeve 90, when the user presses the first or second button shell parts 61‴, 62‴. The pressure sensor parts 61', 62', 62" are configured for converting a pressure into an electrical signal which may transferred to the not shown controller 70.

The first and second button shell parts 61‴, 62‴ may further comprise a flange 64 which secures the first and second button shell parts 61‴, 62‴ to the outer shell 92. The flanges 64 may be particularly useful in embodiments, where the first and second button shell parts 61‴, 62‴ are snapped to the outer shell 90. The outer shell may preferably be formed with a reduced material thickness in the areas where the protruding pressure knobs 63 are located.

An opening 91' may be formed in the base shell 91 in the area of the first and second input devices 61, 62 such that the outer shell 92 in this region/area rest directly on electronic sleeve 80. Thereby, a residency is provided in the area of the first or second button shell parts 61‴, 62‴ allowing an activation of the rest directly on the pressure sensor parts 61', 62', 62".

The connection between the base shell 91 and the outer shell 92 ensures that the handgrip/handle 1 is watertight, and that the electronics on the electronics sleeve is shielded from the outside.

The electronics sleeve 80 may further be provided with a radially outward projecting flange 84 in order to secure a moisture tight connection between the electronics sleeve 80 and the outer sleeve 90.

The outer shell 92 of the outer sleeve is provided with a through-going opening 92' in the area of the display 50 connected to the electronics sleeve 80. Thereby the base shell 91 being formed in a transparent material may form a protective cover51 in the area covering the display 50, and also ensure that moisture cannot get into contact with the display.

The electronics sleeve 80 and the outer sleeve 90 may be fixed together by a fastener such as a screw 85 through a hole 90' through the outer sleeve 90 connecting to a threading 87 in the electronics sleeve 80.

Fig. 4 shows an alternative embodiment of the handles, where in contrast to the above described embodiments the first input device 61, the "plus" button, is in the form of a turn wheel. Thereby several options for the combination of both the function of the `plus' button and a boost function is provided.

One option is to implement a small turn wheel that can also be pressed to be used as the `plus' button as described above, but may also be turned forward to facilitate a boost in speed/power. Also, it may be used to scroll through possible menu's of a control system or select/change certain values or settings. This principle is similar to the operation of a scroll wheel on a computer mouse. Alternatively, the turn wheel may be biased towards a default position. The turn wheel embodiment may be particularly useful for implementing a walk-assist function.

As an alternative to the first input device 61 being provided as a turn wheel, as shown in Fig. 4, or a pressure contact as shown in Figs. 2-3, the first input device 61 alternatively be provided as a pressure sensor at the outer surface 13 of the handle 1, as indicated in Fig. 5. This can be used in a way were pushing the sensor ones makes use as the `plus' button and with a press-and-hold, the boost can kick in. These actions may be confirmed with a gentle vibration in the one or both handgrips.

It is noted that also the second input device 62 may - in any of the above described embodiments - be a pressure sensor provided at the outer surface 13.

In yet other embodiments (not shown) the first input device 61 and/or the second input device may be provided as touch sensitive screens.

Fig. 6 illustrates an embodiment of a power supply to a handle 1 according to the invention. In Fig. 6, a handle bar 104 is shown. On the left side of the handle bar 104 a handle 1 as described above is arranged. This handle 1 comprises a display formed in the outer surface 13 an in a first location facing the user/rider. An input device 60 is also indicated in dashed line in the figure, as the input device 60 faces away from the user/rider and the chosen view, i.e. the input device is formed in the outer surface 13 of the elongate body 10 of the handle 1, but in the second position opposite to the display 50 at the first position.

Fig. 6 also shows two batteries 200 located in a space inside a right handle/handgrip 2. The batteries 200 may function as a power supply for the electronics in the handle 1 according to the invention.

As shown in Fig. 6, the batteries 200 in the right handle 2 may be connected through electrical wiring 76, 77, 78 to the electronic components in the left handle 1 (the display 50 and the input device 60). Also, Fig. 6 illustrates internal electrical wiring 75 between the electric components 50, 60 of left handle. Any LEDs 55 and a vibration motor as mentioned above that are located on the handle/handgrip can also use the same wired connection. In the setup described above, the right handle can be disconnected. Because of this, the batteries that are located in this handle can be recharged

It will be realized that the electrical components 50, 60 and the batteries may, in not shown embodiments, be reversed between the left and right handles 1, 2.

It will also be realized that the handle 1 as described in any of the embodiments above, be supplied with power from the batteries of the power pack 112 provided on the vehicle 100, itself. This may be achieved via a suitable electrical wiring provided from the battery/power pack to the handle 1, through parts of the frame 101 of the vehicle 100 or along parts of the frame 101.

It will also be realized that the handle 1 may be supplied with power from one or more batteries in the handle 1 itself (not shown). For example, one or more batteries may be provided on the electronics sleeve 80 as described above. However, in order to provide sufficient power for the electronic components 50, 60, 70 the power supply needed may be too big for placement on the electronics sleeve 80.

Fig. 7 illustrates how a power supply may be provided in either the handle 1 comprising the electronic components 50, 60, 70, or in the opposite handle 2 as indicated in Fig.6. Fig. 7 illustrates how a battery sleeve 210 is formed as a cylindrical member extending from the end wall 16 of the handle 1, 2 at the second end 12 of the handle 12 and towards the first end 11 of the handle 1. In embodiments as shown and described in connection with Fig. 3, the battery sleeve 210 may be formed as a cylindrical member extending from the end wall 86 of the electronics sleeve 80 and extending towards the first end 11 of the handle 1. The cylindrical battery sleeve 210 defines an internal space 214. This internal space 214 may be utilized for placement of one or more batteries (not shown in Fig. 7).

Fig 8 shows yet another embodiment of the invention. In the above, the invention has been described in connection with controlling the speed or assist level of the vehicle 100. However, the handle according to the invention may also be used t control gears of a vehicle. In this case, and as shown in Fig. 8 the display 50 may indicate the gear that the vehicle is in (indicated by the numbers 1 2 3 in the figure. The first and second input devices may in this case be used to gear up or gear down the vehicle. It will be appreciated that in a system according to the invention, a first handle, e.g. a left handle may be used to control the power assist level of the electric motor 111 and a second handle, e.g. a right handle, as illustrated in Fig. 8 may be used to control the gears of the pedal drive train.

Fig. 9 illustrates how a handle 1 according to the invention, an as described above may be paired with a mobile communication device 300, such as a smart phone. The arrows 301 indicate a communication between the mobile communication device 300 and the handle1. The communication may be wireless such as via Bluetooth or similar. Alternatively of additional a wired connection (cable) may be utilized.

When the handgrip/handle 1 is connected to a smartphone, lots of new possibilities arise. The handle 1 can communicate with the user/rider in much more ways; the handle 1 can interrupt and use the sound of the headphones of the user to make something clear to the user, it can use the smartphone's internet connection to give the user real-time information about traffic, the weather, route directions etc. In case of an emergency, the handgrip can also use the mobile network to call the emergency number when it senses (requires motion sensors built into handle 1) that the bike has fallen and it takes too long before the bike is being picked up.

The smartphone can be used next to the handle 1 on the handlebar 104 just as is seen in Fig. 9, or it can be stay in the user's pocket

In further embodiments the handle 1 according to the invention may further comprise functionalities for navigation purposes. This is illustrated in Fig. 10. Together with a paired smartphone or other mobile communication device 300, e.g. as described in connection with Fig. 9 above, the handle can indicate to the user/rider how to navigate to a predetermined destination. By linking one or both handles 1 on the handle bar 104 to a navigation app in the mobile communication device 300, an indication of an upcoming turn may be provided by the handle 1 or handles in various ways. As shown in the upper left view of Fig. 10, information of an upcoming turn (here a right turn) may be provided by a simple icon displayed in the display 50 in the handle 1. As shown, also a distance to a predetermined target location may be visualized in the displaying information in the display 50 of the handle 1. Navigation information may thereby be provided, when only a single handle 1 has been provided. However, as also indicated above, electronic components may be provided in the opposite handle 2 as well. In this case a tactile signal may be provided to the user, the tactile signal being indicative of an upcoming left or right turn by, Such a tactile signal may be provided by vibration, using a vibration motor in the left or right handle, respectively: This is indicated by the zig zag patterns in Fig. 10. Alternatively, or additionally the handles 1, 2 may further comprise light indications 55 at the second ends 12, for example in the form of LED. Such light indications may signal an upcoming left or right turn by flashing or lighting up.

If the mobile communications device 300 and the handle 1 or handles 1, 2 can be wirelessly connected, the mobile communications device 300 (smartphone) can hereby remain in the user's pocket to increase security.

As illustrated in Fig. 11, a handle 1 according to the invention may comprise further input devices, such as a third input device 65. In Fig. 11 the third input device 65 is provided below the display 50, whereby it may be activated by the users/riders thumb. A third input device 65 may be implemented as described in connection with the first and second input devices 61, 62 above. A third input device 65 may be used for secondary functions, such as for changing between functionalities of the display 50 or the first and/or second input devices 61, 62. It may also be used for simple functions of the vehicle, such as turning on or off lights on the vehicle 100. As illustrated in the figure it may also sound an electronic bell or horn.

Also illustrated in Fig 11 is a left hand 400 of a user/rider on the handle 1.

Fig. 12 illustrates an additional functionality, which may be added to any or all of the above mentioned functionalities of the handle 1 according to the invention. Fig. 12 shows that with the use of e.g. a capacitive touch sensor 69 on the upper surface 25 of one or both handles 1, 2, the system can detect if the user's hands are touching the handles 1, 2. This setup can prevent harmful situations. Feedback can be provided for this implementation in several ways; the LEDs can blink, the grips/handles 1, 2 can start to vibrate or the electric support can be stopped or slowed down. The handgrips will be able to sense if just one hand or both hands are not touching the handles, the feedback that is given can be adjusted accordingly.

Fig. 13 illustrates an additional functionality, which may be added to any or all of the above mentioned functionalities of the handle 1 according to the invention. Fig. 14 shows that for e.g. for recreational cyclists, an inclination sensor implemented in the handle can be a nice addition to their bicycle. It can be possible of the user to check the real-time steepness of a hill on which they are riding.

It is to be noted that the figures and the above description have shown the example embodiments in a simple and schematic manner. Many of the specific mechanical details have not been shown since the person skilled in the art should be familiar with these details and they would just unnecessarily complicate this description

### Parts list

- 1: handle
- 10: elongate body of handle
- 11: first end of elongate body
- 12: second end of elongate body
- 13: outer surface elongate body
- 14: receiving hollow within elongate body
- 15: opening into hollow of elongate body of handle
- 16: end wall at second end of elongate body
- 21: inner portion of elongate body
- 22: outer portion of elongate body
- 23: front portion of elongate body
- 24: back portion of elongate body
- 25: upper surface/upper side of elongate body
- 26: lower surface/lower side of elongate body
- 27: front side/front edge of elongate body
- 28: back/rearward facing side/edge of elongate body
- 29: narrowed portion of elongate body
- 30: protrusion
- 50: display provided at the outer surface of the elongate body
- 51: transparent and protective cover for the display
- 55: light indication (LED) at second end of handle
- 60: input devices provided at the outer surface of the elongate body
- 61: first input device
- 61': pressure sensor part of the first input device
- 61‴: first button shell part of the first input device
- 62: second input device
- 62': pressure sensor part of the second input device
- 62": pressure sensor part of the second input device
- 62'": second button shell part of the second input device
- 63: protruding pressure knobs on the first and second button shell parts
- 64: flange on the first and second button shell parts
- 65: third input device
- 69: capacitive touch sensor
- 70: controller of the handle
- 75: internal electrical wiring of the handle
- 76: electrical wiring
- 77: electrical wiring
- 78: electrical wiring
- 80: first sleeve/electronics sleeve of the handle
- 81: first end of electronics sleeve
- 82: second end of electronics sleeve
- 83: outer surface of the electronics sleeve
- 84: radially outward projecting flange of the electronics sleeve
- 85: fastener/screw
- 86: end wall of the electronics sleeve
- 87: threading in electronics sleeve
- 90: second sleeve/outer sleeve of the handle
- 90': hole through the outer sleeve
- 91: base shell of outer sleeve
- 91': opening formed in the base shell
- 92: outer shell of outer sleeve
- 92': through-going opening in outer shell
- 96: internal hollow of base shell/outer sleeve
- 100: wheeled, pedal driven, electrically assisted vehicle such as an electrically powered bicycle
- 100': electrically powered bicycle
- 101: frame 101 of wheeled, pedal driven, electrically assisted vehicle
- 102: front wheel of wheeled, pedal driven, electrically assisted vehicle
- 103: rear wheel of wheeled, pedal driven, electrically assisted vehicle
- 104: handle bar of wheeled, pedal driven, electrically assisted vehicle
- 105: main sprocket of wheeled, pedal driven, electrically assisted vehicle
- 106: crank arm 106 of wheeled, pedal driven, electrically assisted vehicle
- 107: pedal of wheeled, pedal driven, electrically assisted vehicle
- 108: drive shaft of wheeled, pedal driven, electrically assisted vehicle
- 110: rear sprocket of wheeled, pedal driven, electrically assisted vehicle
- 111: electric motor of wheeled, pedal driven, electrically assisted vehicle
- 112: battery pack of wheeled, pedal driven, electrically assisted vehicle
- 200: battery
- 210: third sleeve/battery sleeve of handle
- 214: internal space in battery sleeve
- 300: mobile communication device
- 400: hand of user
- R: rotation direction

## Claims

1. A system for a wheeled, pedal driven, electrically assisted vehicle (100) comprising a handle (1) and a control system,
wherein the handle (1) comprises:
- an elongate body (10) having a first end (11), a second end (12) and an outer surface (13);
- a receiving hollow (14) provided within said elongate body (10) for receiving a portion of a handle bar (104) of the vehicle (100), such that the elongate body (10) may surround said portion of the handle bar (104), and said outer surface (13) envelopes said portion of the handle bar (104);
- a display (50) provided at the outer surface (13) at said first end (11) of the elongate body (10) at a first position; and
and
wherein the display (50) and one or more input devices (60) in said handle (1) is electronically connected to the control system, the control system being configured for controlling an electric motor (111) of the vehicle (100) , charactered in that said one or more input devices (60) are provided at the outer surface (13) at a second position at an opposite side of said elongate body (10) relative to the first position.

2. A system according to claim 1, wherein the display (50) is configured for displaying an assist level of said electric motor (111), and where at least one of said one or more input devices (60) is configured to set an assist level for the electric motor (111).

3. A system according to claim 1 or 2, wherein the outer surface forms a uniform smooth closed surface.

4. A system according to any one of the claims 1-3, wherein an outer surface of said display (50) is flush with the outer surface (13).

5. A system according to any one of the claims 1-4, wherein the elongate body (10) of the handle (1) comprises a inner portion (21) having a first width, in which inner portion (21) the display (50) is provided, and an outer portion (22), which outer portion comprises a front portion (23) and a back portion (24), which back portion (24) extends beyond the first width in a direction perpendicular to a longitudinal direction (A) of the elongate body (10).

6. A system according to claim 5, wherein a first input device (61) of the one or more input devices (60) is arranged at an intersection between the inner portion (21) and the outer portion (22).

7. A system according to claim 6, wherein a second input device (62) is located in the outer portion (22) adjacent to the first input device (61).

8. A system according to any one of the claims 5-7, wherein a protrusion (30) is provided at an intersection between the inner portion (21) and the outer portion (22).

9. A system according to any one of the claims 1-8, comprising an electronics sleeve (80) and an outer sleeve (90) enveloping said electronics sleeve, said outer sleeve comprising a base shell (91) formed in a transparent material, and an at least partially overlaying outer shell (92) formed in a thermoplastic elastomer material.

10. A system according to any one of the claims 1-9, comprising an end wall (16, 86) formed at the second end (12) of the elongate body (10), and a battery sleeve (210) connected at and extending from the end wall (16, 86) towards the first end (11), an internal space (214) being formed in the battery sleeve (210).

11. A wheeled, pedal driven, electrically assisted vehicle (100) comprising a controller and a handle bar (104) and the system according to any of the claims 1-10, wherein said controller is configured for operating the control system according to any one of the claims 1-10 and wherein at least one end of the handle bar (104) comprises a handle (1) according to any one of the claim 1- 10.

## Patentansprüche

1. System für ein bereiftes, mit Pedalen angetriebenes Fahrzeug (100) mit elektrischem Hilfsantrieb, das einen Griff (1) und ein Steuersystem umfasst,
wobei der Griff (1) Folgendes umfasst:
- einen länglichen Körper (10), der ein erstes Ende (11), ein zweites Ende (12) und eine Außenoberfläche (13) aufweist;
- eine Aufnahmeaushöhlung (14), die innerhalb des länglichen Körpers (10) vorgesehen ist, um einen Abschnitt einer Lenkstange (104) des Fahrzeugs (100) aufzunehmen, sodass der längliche Körper (10) den Abschnitt der Lenkstange (104) umgeben kann und die Außenoberfläche (13) den Abschnitt der Lenkstange (104) umschließt;
- eine Anzeige (50), die an der Außenoberfläche (13) des ersten Endes (11) des länglichen Körpers (10) bei einer ersten Position vorgesehen ist; und
und
wobei die Anzeige (50) und eine oder mehrere Eingabevorrichtungen (60) in dem Griff (1) elektronisch mit dem Steuersystem verbunden sind, wobei das Steuersystem dazu ausgelegt ist, einen Elektromotor (111) des Fahrzeugs (100) zu steuern, **dadurch gekennzeichnet, dass** die eine oder mehreren Eingabevorrichtungen (60) an der Außenoberfläche (13) bei einer zweiten Position an einer entgegengesetzten Seite des länglichen Körpers (10) relativ zu der ersten Position vorgesehen sind.

2. System nach Anspruch 1, wobei die Anzeige (50) dazu ausgelegt ist, eine Unterstützungsstufe des Elektromotors (111) anzuzeigen, und wo zumindest eine der einen oder mehreren Eingabevorrichtungen (60) dazu ausgelegt ist, eine Unterstützungsstufe für den Elektromotor (111) einzustellen.

3. System nach Anspruch 1 oder 2, wobei die Außenoberfläche eine einheitliche, glatte, geschlossene Oberfläche bildet.

4. System nach einem der Ansprüche 1-3, wobei eine Außenoberfläche der Anzeige (50) mit der Außenoberfläche (13) bündig ist.

5. System nach einem der Ansprüche 1-4, wobei der längliche Körper (10) des Griffs (1) einen Innenabschnitt (21) mit einer ersten Breite, in welchem Innenabschnitt (21) die Anzeige (50) vorgesehen ist, und einen Außenabschnitt (22) aufweist, welcher Außenabschnitt einen Vorderabschnitt (23) und einen Rückabschnitt (24) umfasst, welcher Rückabschnitt (24) sich über die erste Breite in einer Richtung senkrecht zu einer Längsrichtung (A) des länglichen Körpers (10) erstreckt.

6. System nach Anspruch 5, wobei eine erste Eingabevorrichtung (61) der einen oder mehreren Eingabevorrichtungen (60) bei einem Schnittpunkt zwischen dem Innenabschnitt (21) und dem Außenabschnitt (22) eingerichtet ist.

7. System nach Anspruch 6, wobei eine zweite Eingabevorrichtung (62) in dem Außenabschnitt (22) angrenzend an die erste Eingabevorrichtung (61) liegt.

8. System nach einem der Ansprüche 5-7, wobei ein Fortsatz (30) bei einem Schnittpunkt zwischen dem Innenabschnitt (21) und dem Außenabschnitt (22) vorgesehen ist.

9. System nach einem der Ansprüche 1-8, umfassend eine Elektronikummantelung (80) und eine Außenummantelung (90), die die Elektronikummantelung umschließt, wobei die Außenummantelung eine Basishülle (91), die aus einem durchsichtigen Material gebildet ist, und eine zumindest teilweise darüberliegende Außenhülle (92) umfasst, die aus einem thermoplastischen Elastomermaterial gebildet ist.

10. System nach einem der Ansprüche 1-9, umfassend eine Stirnwand (16, 86), die bei dem zweiten Ende (12) des länglichen Körpers (10) gebildet ist, und eine Batterieummantelung (210), die bei der Stirnwand (16, 86) verbunden ist und sich von dieser zu dem ersten Ende (11) erstreckt, wobei ein Innenraum (214) in der Batterieummantelung (210) gebildet ist.

11. Bereiftes, mit Pedalen angetriebenes Fahrzeug (100) mit elektrischem Hilfsantrieb, das eine Steuereinheit und eine Lenkstange (104) umfasst, und das System nach einem der Ansprüche 1-10, wobei die Steuereinheit dazu ausgelegt ist, das Steuersystem nach einem der Ansprüche 1-10 auszuführen und wobei zumindest ein Ende der Lenkstange (104) einen Griff (1) nach einem der Ansprüche 1-10 umfasst.

## Revendications

1. Système pour un véhicule (100) sur roues, à assistance électrique, propulsé par pédale comprenant une poignée (1) et un système de commande,
dans lequel la poignée (1) comprend :
- un corps allongé (10) présentant une première extrémité (11), une seconde extrémité (12) et une surface extérieure (13) ;
- un creux de réception (14) prévu dans ledit corps allongé (10) pour la réception d'une portion d'un guidon (104) du véhicule (100) de sorte que le corps allongé (10) puisse entourer ladite portion du guidon (104), et ladite surface extérieure (13) enveloppe ladite portion du guidon (104) ;
- un écran (50) prévu au niveau de la surface extérieure (13) sur ladite première extrémité (11) du corps allongé (10) dans une première position ; et
et
dans lequel l'écran (50) et un ou plusieurs dispositifs d'entrée (60) dans ladite poignée (1) sont électroniquement reliés au système de commande, le système de commande étant configuré pour commander un moteur électrique (111) du véhicule (100), **caractérisé en ce que** lesdits un ou plusieurs dispositifs d'entrée (60) sont prévus au niveau de la surface extérieure (13) dans une seconde position sur un côté opposé dudit corps allongé (10) par rapport à la première position.

2. Système selon la revendication 1, dans lequel l'écran (50) est configuré pour afficher un niveau d'assistance dudit moteur électrique (111), et dans lequel au moins un desdits un ou plusieurs dispositifs d'entrée (60) est configuré pour régler un niveau d'assistance pour le moteur électrique (111).

3. Système selon la revendication 1 ou 2, dans lequel la surface extérieure forme une surface fermée lisse uniforme.

4. Système selon l'une quelconque des revendications 1-3, dans lequel une surface extérieure dudit écran (50) est alignée sur la surface extérieure (13).

5. Système selon l'une quelconque des revendications 1-4, dans lequel le corps allongé (10) de la poignée (1) comprend une portion intérieure (21) présentant une première largeur, dans laquelle portion intérieure (21) l'écran (50) est prévu, et une portion extérieure (22), laquelle portion extérieure comprend une portion avant (23) et une portion arrière (24), laquelle portion arrière (24) s'étend au-delà de la première largeur dans une direction perpendiculaire à une direction longitudinale (A) du corps allongé (10).

6. Système selon la revendication 5, dans lequel un premier dispositif d'entrée (61) des un ou plusieurs dispositifs d'entrée (60) est agencé à une intersection entre la portion intérieure (21) et la portion extérieure (22).

7. Système selon la revendication 6, dans lequel un second dispositif d'entrée (62) est situé dans la portion extérieure (22) adjacente au premier dispositif d'entrée (61).

8. Système selon l'une quelconque des revendications 5-7, dans lequel une saillie (30) est prévue à une intersection entre la portion intérieure (21) et la portion extérieure (22).

9. Système selon l'une quelconque des revendications 1-8, comprenant un manchon électronique (80) et un manchon extérieur (90) enveloppant ledit manchon électronique, ledit manchon extérieur comprenant une coque de base (91) formée en un matériau transparent, et une coque extérieure (92) de recouvrement au moins partiel formée en un matériau élastomère thermoplastique.

10. Système selon l'une quelconque des revendications 1-9, comprenant une paroi d'extrémité (16, 86) formée sur la seconde extrémité (12) du corps allongé (10), et un manchon de batterie (210) relié à et s'étendant depuis la paroi d'extrémité (16, 86) vers la première extrémité (11), un espace interne (214) étant formé dans le manchon de batterie (210).

11. Véhicule (100) sur roues, à assistance électrique, propulsé par pédale, comprenant un dispositif de commande et un guidon (104) et le système selon l'une quelconque des revendications 1-10, dans lequel ledit dispositif de commande est configuré pour faire fonctionner le système de commande selon l'une quelconque des revendications 1-10 et dans lequel au moins une extrémité du guidon (104) comprend une poignée (1) selon l'une quelconque des revendications 1-10.
